# EUROPEAN PATENT SPECIFICATION

(11) **EP 0 383 302 B1**
(45) Date of publication and mention of the grant of the patent: **27.10.1993**
(21) Application number: 90102898.5
(22) Date of filing: 14.02.1990
(51) Int. Cl.: B61C 3/00

(54) **Electric locomotive**
Elektrische Lokomotive
Locomotive électrique

(30) Priority: 15.02.1989 JP 33600/89
(43) Date of publication of application: 22.08.1990
(73) Proprietor: HITACHI, LTD., Chiyoda-ku, Tokyo 100 (JP)
(72) Inventor: Miyashita, Tomoharu, Katsuta-shi, Ibaraki 312 (JP); Yamaguchi, Hiroshi, Katsuta-shi, Ibaraki 312 (JP)
(74) Representative: Strehl Schübel-Hopf Groening & Partner

(56) References cited:
- US-A- 2 638 056
- ELEKTRISCHE BAHNEN. vol. 86, no. 6, MUNCHEN DE pages 179 - 183; V.P. Janow et al.: "Zwölfachsige elektrische Doppellokomotive WL85 für die Eisenbahnen der UdSSR"

## Description

### Background of the Invention

The present invention relates to an electric locomotive and a method of equipping an electric locomotive.

A conventional electric locomotive as shown in Japanese Patent Laid-Open No. 87-131862 has electric devices arranged according to the flow of electric current in the travelling direction of a car body of the electric locomotive body, taking account of equipping and wiring.

In the above mentioned conventional structure, the respective electric devices were individually mounted on the car body, so that a working space for mounting each electric device to the car body and for wiring the respective electric devices had to be secured around each electric device. Therefore, a space for equipping the electric devices in the car body was increased, and the car body was obliged to be made longer. Furthermore, wires electrically connecting between respective electric devices could not be shortened, and as a result, both the reduction in wire weight and the decrease in the electric resistance of the wires were restricted. In addition, different electric devices were naturally different in rigidity and also in the behavior of vibration caused during the travelling of the car body, hence flexible wires or the like which could allow the relative displacement between them had to be used to connect the respective electric devices, and periodical check for the looseness of terminals and so on and maintenance such as replacement of deteriorated wires were required.

### Summary of the Invention

An object of the present invention is to provide an electric locomotive in which a space for installing electric devices in the car body is reduced, and the length of wires required to establish an electrical connection between respective electric devices can be made shorter.

Another object of the present invention is to provide a method of equipping an electric locomotive, in which installation of electric devices can easily be effected.

Briefly stated, an electric locomotive according to the present invention is characterized in that electric devices to be mounted in a body of the electric locomotive are allotted into a power supply block, in which the electric device or devices concerning electric power supply are integrally assembled as one unit, and at least one control-related device block in which the electric devices concerning braking control are integrally assembled as a unit or units, the blocks being individually mounted on the car body.

The electric devices in each block are integrally assembled as one unit, so that the space occupied by the electric devices in each block can be reduced greatly and a sufficient working space can be provided around each block without expansion of the car body. The electric devices integrally assembled can be electrically connected with each other with shorter electric conductors or wires.

Further, the electric devices can be assembled in each block outside the car body together with wiring between the respective electric devices in each block. Therefore, easiness and efficiency of the equipping work can be improved greatly.

### Brief Description of the Drawing

Fig. 1 is a schematic diagram of a main part of an electric locomotive according to the present invention;
Fig. 2 is a plan view of an electric locomotive taken from a line 2-2 of Fig. 1; and
Fig. 3 is a plan view of a part of an electric locomotive, showing an example of arrangement of electric devices.

### Detailed Description of the Invention

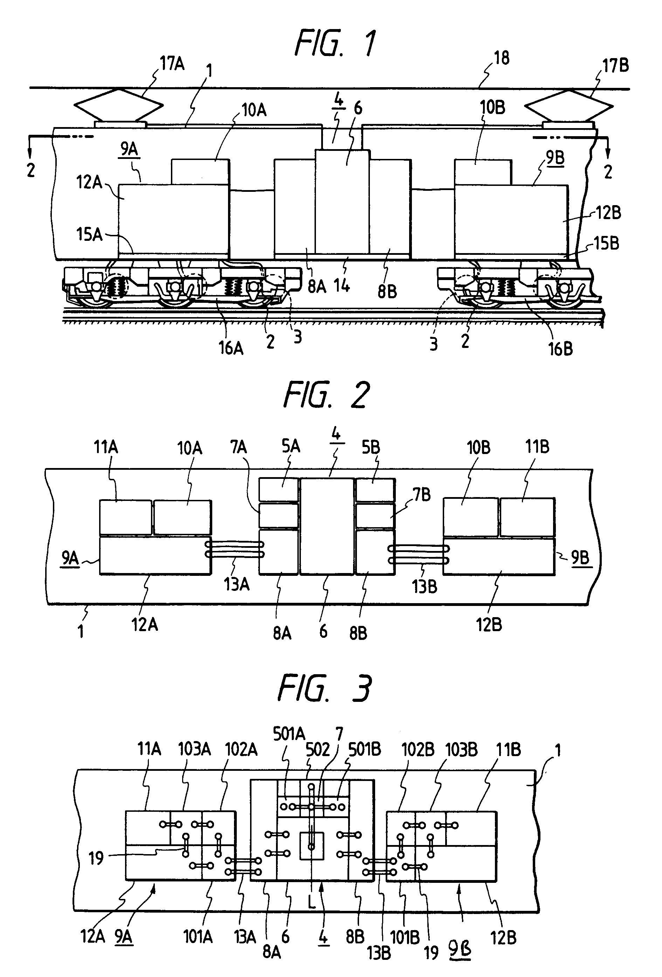

The present invention will be described hereunder in more detail, referring to an embodiment shown in Figs. 1 and 2.

Figs. 1 and 2 show an example of an AC-DC dual-purpose electric locomotive.

The electric locomotive shown in Figs. 1, 2 has a pair of bogies and a car body 1 mounted on the bogies 16B, 16B. The bogies 16A, 16B each comprises wheels 2 and traction motors 3 for driving the wheels 2 respectively. The car body 1 is provided with a plurality of electric devices classified and allotted into two or more blocks. Power received from overhead wires 18 through pantographs 17A, 17B is supplied to the traction motors 3 through the electric devices to give tractive force to the wheels. One of the blocks is a power supply block 4 and the others are controller or control related device blocks 9A, 9B. The power supply block 4 is arranged at a central portion in the longitudinal direction of the car body 1, for example, between the pair of bogies 16A, 16B in case that two bogies are used for supporting the car body 1 and the controller blocks 9A, 9B are arranged at forward and backward sides of the power supply block 4 in the longitudinal direction of the car body 1.

The power supply block 4 consists of so-called power-related devices of extra-high voltage devices 5A and 5B, a transformer 6, high speed circuit breakers 7A and 7B, rectifiers 8A and 8B, etc., and the block 4 has an electric power supply function.

The controller blocks 9A, 9B on both sides of the block 4 comprises controllers 10A and 10B, brake resistors 11A and 11B, three-phase AC converters 12A and 12B, etc..

A more concrete example of the power supply block 4 and the control-related device blocks 9A and 9B is shown in Fig. 3. In Fig. 3, the power supply block 4 consists of pantograph disconnectors 501A, 501B electrically connected to the pantographs 17A, 17B mounted on a roof of the car body 1, a circuit breaker 7 electrically connected to the pantograph disconnectors 501A, 501B to cut off electric power supply at an accident, a lightening arrestor 502 for allowing electric current to pass the rail so that the high voltage will not be applied to the electric devices when the overhead wires or the pantographs are struck, a transformer 6 for transforming the overhead wire voltage of AC 20000V to 25000V to controlable voltage of about 1500V, for example, and rectifiers 8A, 8B for rectifying AC to generate DC. These electric devices are arranged symmetrically with respect to a line L which is perpendicular to the longitudinal direction of the car body 1 and passes the center of the block 4. The control-related device blocks 9A, 9B each consist of smoothing reactors 101A, 101b electrically connected to the rectifiers 8A, 8B of the power supply block for smoothing fluctuation of voltage current of the power supply from the power supply block, three phase AC convertors 12A, 12B for generating three phase AC power supplies from the DC power supply to drive the traction motors 3, filter capacitors 102A, 102B electrically connected to the smoothing reactors 101A, 101B for temporarily storing electric energy to make conditions easy to control the AC convertors 12A, 12B, braking chopper devices 103A, 103B connected to the three phase AC convertors for controlling the voltage when by means of electrical braking motive energy is converted into electric energy and braking resisters 11A, 11B for converting the electric energy into thermal energy thereby continuously consuming the energy. The control related device blocks 9A and 9B are arranged symmetrically with respect to the power supply block 4. As mentioned above, each of the blocks 9A and 9B has the function to receive electric power from the power supply block change voltage, electric current, power frequency etc. and control torque and r.p.m. of the traction motors 3 to drive the traction motors 3.

The electric devices in each of the blocks 4, 9A and 9B are mutually assembled to form a block or unit as a whole, and electrically connected using copper bars 19 or the like, so that each of the blocks 4, 9A and 9B functions as a power supply or controller as a whole. The power supply block 4 and the controller blocks 9A and 9B are connected by wires or flexible conductors 13A and 13B which are more flexible than the copper bars 19. For example, the power supply block 4 functions to incessantly supply electric power, supplied from the overhead wires 18 through the pantographes 17A, 17B as AC power or DC power, to the controller blocks 9A and 9B as constant voltage DC power. In this example, since the electric devices forming a main circuit and equipping the interior of the car body 1 of the electric locomotive are mounted in three blocks on the car body 1, they can be brought into the car body 1 through an openable portion (not shown) provided in the roof of the car body 1, and installed on the car body 1 using passage spaces formed between the respective blocks. The wiring in each block is completed using the top, bottom and both sides of the block, before the block is installed onto the car body 1, and thus, any special space for wiring is not required in each block. The electric devices in the respective blocks 4, 9A, 9B are close to each other, hence, the length of wiring and the space occupied by the electric devices can be greatly reduced.

Moreover, as regards the respective blocks 4, 9A, 9B, electric devices are installed in the respective common frames or mounting bases 14, 15A and 15B together with electrical connection, outside the car body 1 before being installed into the car body 1. Therefore, it is only required to carry the blocks 4, 9A, 9B into the car body 1 for the sake of installation. Thus, the work for installing electric devices onto the car body 1 is easy because it is effected by securing the mounting bases 14, 15A and 15B mounting thereon the electric devices to the car body 1.

In the above-mentioned example, two controller blocks 9A, 9B are used for installation on both sides of the power-supply block 4, so that one half of the whole tractive force of the electric locomotive can be borne by functioning one of the two control related device blocks 9A, 9B, and one or two of the control related device blocks can be functioned according to light duty operation, heavy duty operation or the gradient of a slope. However, the control related electric devices can also be installed as one controller block.

According to the present invention, the working space for installing the electric devices to be mounted on the car body of an electric locomotive can be reduced, and the installation work is easy. Besides, thanks to reduction of working space or assembling of the electric devices in a close relation, the length of wiring can be reduced to decrease the electric resistance of wiring and the loss of energy due to the generation of heat.

Since different electric devices are mutually assembled to constitute integral blocks, they are moved as whole blocks by the vibration generated by the travelling of the car body 1, and the wiring of the electric devices in each block 4, 9A, 9B so as to allow relative displacement is not required. Therefore, materials free from characteristic deterioration and high in rigidity such as copper bars can be used.

Because the materials high in rigidity such as copper bars are not displaced by vibration and so forth after wiring and assembling, there is no need to provide a distance or gap for the insulation that may be required by voltage difference. Also in this connection, the equipment density in each block can be enhanced.

## Claims

1. An electric locomotive in which electric power is received and fed to traction motors (3) through a plurality of electric devices (5..8, 10...12) mounted on the car body (1), characterized in that said plurality of electric devices (5...8, 10....12) are allotted to a power supply block (4) and at least one control related device block (9A, 9B), said power supply block (4) including one or more of said electric devices (5...8) concerning power supply, and said control related device block (9A, 9B) having the other electric devices (10...12) assembled as one unit.

2. The locomotive of claim 1, including two control-related device blocks (9A, 9B) positioned close to said traction motors (3).

3. The locomotive of claim 2, wherein said control related device blocks (9A, 9B) and said power supply block (4) are arranged in row in the travelling direction of said car body (1) so that said control related device blocks (9A, 9B) are positioned at the front and rear sides of said power supply block (4).

4. The locomotive of any one of claims 1 to 3, wherein said electric devices in each control related device block (9A, 9B) and power supply block (4) are mutually mechanically and electrically connected as one unit.

5. The locomotive of claim 4, wherein said electric devices (5...8, 10...12) in each of said blocks (4, 9A, 9B) are electrically connected by bar-like conductors (19) or flexible conductors.

6. An electric locomotive in which electric power is received from overhead wires (18) through pantographs (17A, 17b) provided on a car body (1) and fed to traction motors (3) for driving wheels (2) through a plurality of electric devices (5...8, 10...12) characterized in that said electric devices (5...8, 10...12) are classified into a plurality of blocks (4, 9A, 9B) according to their functions, each of said blocks (4, 9A, 9B) being individually mounted on the car body (1) and having the electric devices of the same function mechanically and electrically interconnected as one unit.

7. The locomotive of claim 6, wherein one (4) of said blocks has a power supply function, and the other blocks (9A, 9B) each have a control function.

8. The locomotive of any one of claims 1 to 7, wherein each of said blocks (4, 9A, 9B) has a base plate (14, 15A, 15B) mounting thereon said electric devices (5...8, 10...12) associated in an adjacent relation, each of said base plates (14, 15A, 15B) being mounted on said car body (1) with a sufficient working space around it.

9. A method of equipping an electric locomotive with electric devices (5...8, 10...12) through which electric power received from electric lines (18) is fed to traction motors (3), characterized by the steps of:
classifying said electric devices (5...8, 10...12) into a power supply block (4) and control related device blocks (9A, 9B),
connecting mechanically and electrically said electric devices (5...8, 10...12) in each of said blocks (4, 9A, 9B) to form an individual unit,
mounting said block (4, 9A, 9B) on the car body (1) leaving a sufficient working space between adjacent blocks (4, 9A, 9B), and
wiring between said blocks (4, 9A, 9B).

10. The method of claim 9, wherein said electric devices (5...8, 10..12) in each of said blocks (4, 9A, 9B) are mounted on a base plate (14, 15A, 15B) and said base plates are mounted on said car body (1).

11. The method of claim 9 or 10, wherein said electric devices (5...8, 10...12) in each of said blocks (4, 9A, 9B) are assembled outside said car body (1) and the assembled blocks are inserted into said car body and mounted thereon.

## Patentansprüche

1. Elektrische Lokomotive, bei der elektrische Energie aufgenommen und Antriebsmotoren (3) über mehrere elektrische Geräte (5..8, 10..12), die auf dem Fahrzeugkörper (1) montiert sind, zugeführt wird, dadurch gekennzeichnet, daß die mehreren elektrischen Geräte (5..8, 10..12) einem Energieversorgungsblock (4) und zumindest einem regelungsbezogenen Geräteblock (9A, 9B) zugeordnet sind, wobei der Energieversorgungsblock (4) ein oder mehrere der elektrischen Geräte (5...8), welche die Energieversorgung betreffen, und der regelungsbezogene Geräteblock (9A, 9B) die anderen zu einer Einheit montierten elektrischen Geräte (10..12) umfaßt.

2. Lokomotive nach Anspruch 1, die zwei regelungsbezogene Geräteblöcke (9A, 9B) aufweist, welche in der Nähe der Antriebsmotoren (3) angeordnet sind.

3. Lokomotive nach Anspruch 2, wobei die regelungsbezogenen Geräteblöcke (9A, 9B) und der Energieversorgungsblock (4) in einer Reihe in der Bewegungsrichtung des Fahrzeugkörpers (1) angeordnet sind, so daß die regelungsbezogenen Geräteblöcke (9A, 9B) auf der Vorder- und Rückseite des Energieversorgungsblocks (4) positioniert sind.

4. Lokomotive nach einem der Ansprüche 1 bis 3, wobei die elektrischen Geräte in jedem regelungsbezogenen Geräteblock (9A, 9B) und im Energieversorgungsblock (4) gegenseitig mechanisch und elektrisch miteinander als eine Einheit verbunden sind.

5. Lokomotive nach Anspruch 4, wobei die elektrischen Geräte (5...8, 10...12) in jedem der Blöcke (4, 9A, 9B) mittels schienenartiger Leiter (19) oder flexibler Leiter verbunden sind.

6. Elektrische Lokomotive, bei der elektrische Energie von Oberleitungen (18) mittels auf dem Fahrzeugkörper (1) vorgesehener Stromabnehmer (17A, 17B) aufgenommen und Antriebsmotoren (3) zum Antrieb von Rädern (2) über mehrere elektrische Geräte (5..8, 10..12) zugeführt wird, dadurch gekennzeichnet, daß die elektrischen Geräte (5..8, 10..12) nach ihrer Funktion verschiedenen Blöcken (4, 9a, 9B) zugeordnet sind, wobei jeder dieser Blöcke (4, 9A, 9B) einzeln auf dem Fahrzeugkörper (1) angebracht ist, und wobei elektrische Geräte mit der gleichen Funktion mechanisch und elektrisch als eine Einheit miteinander verbunden sind.

7. Lokomotive nach Anspruch 6, wobei einer (4) der Blöcke eine Energieversorgungsfunktion aufweist und die anderen Blöcke (9A, 9B) jeweils Regelungsfunktionen aufweisen.

8. Lokomotive nach einem der Ansprüche 1 bis 7, wobei jeder der Blöcke (4, 9A, 9B) eine Grundplatte (14, 15A, 15B) aufweist, auf der die elektrischen Geräte (5...8, 10...12) nebeneinander angeordnet angebracht sind, und jede der Grundplatten (14, 15A, 15B) mit ausreichend Arbeitsraum rundherum auf dem Fahrzeugkörper (1) angebracht ist.

9. Verfahren zur Ausrüstung einer elektrischen Lokomotive mit elektrischen Geräten (5...8, 10...12), über die aus elektrischen Leitungen (18) zugeführte elektrische Energie Antriebsmotoren (3) zugeführt wird, gekennzeichnet durch die folgenden Schritte:
Einordnung der elektrischen Geräte (5...8, 10...12) in einen Energieversorgungsblock (4) und regelungsbezogene Geräteblöcke (9A, 9B),
mechanische und elektrische Verbindung der elektrischen Geräte (5...8, 10...12) in jedem Block (4, 9A, 9B) zur Bildung einer einzelnen Einheit,
Anbringen der Blöcke (4, 9A, 9B) auf dem Fahrzeugkörper (1) unter Beibehaltung eines ausreichenden Arbeitsraumes zwischen benachbarten Blöcken (4, 9A, 9B), und
Verdrahten zwischen den Blöcken (4, 9A, 9B).

10. Verfahren nach Anspruch 9, wobei die elektrischen Geräte (5...8, 10...12) in jedem Block (4, 9A, 9B) auf einer Grundplatte (14, 15A, 15B) angebracht sind und die Grundplatten auf dem Fahrzeugkörper (1) angebracht sind.

11. Verfahren nach Anspruch 9 oder 10, wobei die elektrischen Geräte (5..8, 10...12) in jedem Block (4, 9A, 9B) außerhalb des Fahrzeugkörpers (1) montiert sind und die montierten Blöcke in den Fahrzeugkörper (1) eingeführt und dort angebracht werden.

## Revendications

1. Locomotive électrique dans laquelle la puissance électrique est reçue et appliquée à des moteurs de traction (3) par l'intermédiaire d'une pluralité de dispositifs électriques (5...8 , 10...12) montés sur la carrosserie (1), caractérisée en ce que ladite pluralité de dispositifs électriques (5...8, 10...12) sont affectés à un bloc d'alimentation (4) et à au moins un bloc de dispositif associé de commande (9A, 9B), ledit bloc d'alimentation (4) comprenant un ou plusieurs desdits dispositifs électriques (5...8) concernant l'alimentation, et ledit bloc de dispositif associé de commande (9A, 9B) ayant les autres dispositifs électriques (10...12) assemblés pour former une unité.

2. Locomotive selon la revendication 1, comprenant deux blocs de dispositifs associés de commande (9A, 9B) disposés près desdits moteurs de traction (3).

3. Locomotive selon la revendication 2, dans laquelle lesdits blocs de dispositif associés de commande (9A, 9B) et ledit bloc d'alimentation (4) sont disposés en rangée dans la direction de déplacement de ladite carrosserie (1) de sorte que lesdits blocs de dispositif associé de commande (9A, 9B) sont disposés sur les côtés antérieur et postérieur dudit bloc d'alimentation (4).

4. Locomotive selon l'une quelconque des revendications 1 à 3, dans laquelle lesdits dispositifs électriques dans chaque bloc de dispositif associé de commande (9A, 9B) et le bloc d'alimentation (4) sont mutuellement reliés mécaniquement et électriquement pour former une unité.

5. Locomotive selon la revendication 4, dans laquelle lesdits dispositifs électriques (5...8, 10..12) dans chacun desdits blocs (4), (9A, 9B) sont reliés électriquement par des conducteurs sous forme de barres (19) ou des conducteurs souples.

6. Locomotive électrique dans laquelle la puissance électrique est reçue à partir de caténaires (18) par l'intermédiaire de pantographes (17A, 17B) prévus sur la carrosserie (1) et appliquée à des moteurs de traction (3) pour entraîner les roues (2) par l'intermédiaire d'une pluralité de dispositifs électriques (5...8, 10...12), caractérisée en ce que lesdits dispositifs électriques (5...8, 10...12) sont classés en une pluralité de blocs (4, 9A, 9B) selon leurs fonctions, chacun desdits blocs (4, 9A, 9B) étant monté individuellement sur la carrosserie (1) et ayant les dispositifs électriques assurant la même fonction mécaniquement et électriquement interconnectés pour former une unité.

7. Locomotive selon la revendication 6, dans laquelle l'un (4) desdits blocs possède une fonction d'alimentation et les autres blocs (9A, 9B) ont chacun une fonction de commande.

8. Locomotive selon l'une quelconque des revendications 1 à 7, dans laquelle chacun desdits blocs (4, 9A, 9B) possède une plaque d'embase (14, 15A, 15B) supportant lesdits dispositifs électriques (5...8, 10...12) associés de façon adjacente, chacune desdites plaques d'embase (14, 15A, 15B) étant montée sur ladite carrosserie (1) avec un espace de travail suffisant autour d'elle.

9. Procédé d'équipement d'une locomotive électrique avec des dispositifs électriques (5...8, 10...12) par l'intermédiaire desquels la puissance électrique reçue de lignes électriques (18) est délivrée à des moteurs de traction (3), caractérisé par les étapes consistant à :
classer lesdits dispositifs électriques (5...8, 10...12) en un bloc d'alimentation (4) et en blocs de dispositif associé de commande (9A, 9B),
relier mécaniquement et électriquement lesdits dispositifs électriques (5...8, 10...12) dans chacun desdits blocs (4, 9A, 9B) pour former une unité individuelle,
monter ledit bloc (4, 9A, 9B) sur la carrosserie (1) en laissant un espace de travail suffisant entre des blocs adjacents (4, 9A, 9B), et
effectuer un câblage entre lesdits blocs (4, 9A, 9B).

10. Procédé selon la revendication 9, dans lequel lesdits dispositifs électriques (5...8, 10...12) dans chacun desdits blocs (4, 9A, 9B) sont montés sur une plaque d'embase (14, 15A, 15B) et lesdites plaques d'embase sont montées sur ladite carrosserie (1).

11. Procédé selon la revendication 9 ou 10, dans lequel lesdits dispositifs électriques (5...8, 10...12) dans chacun desdits blocs (4, 9A, 9B) sont assemblés à l'extérieur de ladite carrosserie (1) et les blocs assemblés sont introduits dans ladite carrosserie et montés sur celle-ci.
